**Europäisches Patentamt**

**European Patent Office**

**Office européen des brevets**

(11) Veröffentlichungsnummer: **0 264 404 B1**

(12) **EUROPÄISCHE PATENTSCHRIFT**

(45) Veröffentlichungstag der Patentschrift:
**16.10.91 Patentblatt 91/42**

(51) Int. Cl.⁵: **G02B 5/20, G02B 21/10,**
**G02B 21/24**

(21) Anmeldenummer: **87902414.9**

(22) Anmeldetag: **30.04.87**

(86) Internationale Anmeldenummer:
**PCT/DE87/00192**

(87) Internationale Veröffentlichungsnummer:
**WO 87/06714 05.11.87 Gazette 87/24**

(54) **VORRICHTUNG ZUM SELBSTTAETIGEN FOKUSSIEREN EINES AUFLICHTMIKROSKOPES.**

(30) Priorität: **30.04.86 DE 3614676**
**23.05.86 DE 3617421**

(43) Veröffentlichungstag der Anmeldung:
**27.04.88 Patentblatt 88/17**

(45) Bekanntmachung des Hinweises auf die
Patenterteilung:
**16.10.91 Patentblatt 91/42**

(84) Benannte Vertragsstaaten:
**CH DE FR GB LI NL**

(56) Entgegenhaltungen:
**EP-A- 0 035 063**
**EP-A- 0 122 390**

(56) Entgegenhaltungen:
**FR-A- 2 527 788**
**US-A- 4 520 388**
**Patent Abstracts of Japan, vol. 9, no. 148,**
**(P-366)(1871), 22 June 1985; & JP-A-6026311**
**Naumann et al.: "Bauelemente der Optik",**
**München 1983**

(73) Patentinhaber: **Leica Industrieverwaltung
GmbH
Ernst-Leitz-Strasse 30 Postfach 20 20
W-6330 Wetzlar 1 (DE)**

(72) Erfinder: **NEUMANN, Burkhard
Gotenweg 62
W-6330 Wetzlar 1 (DE)**
Erfinder: **STANKEWITZ, Hans-Werner
Taunusstr. 3
W-6330 Wetzlar 15 (DE)**

**Beschreibung**

Die Erfindung betrifft ein mit einer Autofokus-Anordnung versehenes optisches Gerät zur Realisierung einer Dunkelfeldbeleuchtung.

Die prinzipielle Wirkungsweise einer Laserautofokus-Anordnung ist aus der DE-PS 32 19 503 bekannt. Wollte man bei einem derartigen Gerät eine Dunkelfeldbeleuchtung realisieren, so müßte eine kreisförmige Ausblendung des Zentralbereichs eines Beleuchtungsstrahlenbündels, beispielsweise mittels Einschwenkens eines gebäuchlichen Mittenstopps, vorgenommen werden. Dabei wird jedoch die Funktion des Laserautofokus unwirksam gemacht und außerdem wird das Meßlicht ebenfalls ausgeblendet.

Zur Behebung dieses Nachteils wäre es demnach notwendig, den Dunkelfeld-Stopp als Infrarot-Filter (IR-Filter) auszubilden, das das sichtbare Licht zu 100 % absorbiert, jedoch ab einem im nahen IR liegenden Wellenlängenbereich öffnet. Eine derartige Maßnahme allein würde jedoch zu einem unerwünschien Fokusversatz führen, denn eine planparallele IR-Filterplatte verursacht im Strahlengang eine Schnittweitenänderung

Es ist daher die Aufgabe der voliegenden Erfindung, bei einer Laserautofokus-Anordnung eine Dunkelfeldbeleuchtung ohne Beeinträchtigung bzw. Eliminierung bezüglich der eigentlichen Autofokus-Funktion zu gewährleisten.

Das Bauelement das in der Vorrichtung verwendet wird, ist es als Filter-Linse ausgebildet. Es ist indes auch möglich, daß das optische Bauelement als Filter-Fresnellinse oder als Filterlinsen-Array vorliegt. Nach einer bevorzuten Ausführungsform der voliegenden Erfindung ist(sind) die Linse(n) als Sammellinse(n) ausgebildet. Mit Vorteil weist das optische Bauelement die Eigenschaft auf, daß es sichtbares Licht vollständig absorbiert und für kürzer- bzw. längerwelliges Licht, also einerseits für IR- Licht und andererseits für UV-Licht, transparent ist.

Die gennante Aufgabe der Erfindung wird durch eine Vorrichtung nach Anspruch 1 gelöst 1 gelöst.

Es ist zweckmäßig, die IR-Filterlinse zwischen einer Tubuslinse und einer in der Ebene einer Leuchtfeldblende vorgesehenen Marke, vorzugsweise einer Flüssigkristall-Matrix, ein- und ausschiebbar anzuordnen. Als besonders vorteilhaft hat es sich erwiesen, die Infrarot-Fiilerlinse derart auszubilden, daß sie sichtbares Licht vollständig absorbiert und ab einer im nahen IR-Bereich liegenden Wellenlänge eine transparente Filtercharakteristik aufweist, wobei maximale Transmission bei einer Wellenlänge von 903 nm gegeben ist. Die Vorrichtung kann auch derart getroffer, sein, daß die IR-Fiilerlinse bezüglich ihrer abbildungsrelevanten sowie ihrer Material- und Geometrie-Eigenschaften derart ausgewählt bzw. bemessen ist, daß ein durch Einschwenken der IR-Filterlinse in das Beleuchtungsstrahlenbündel hervorgerufener Fokusversatz entsprechend kompensiert wird. Dabei ist es möglich, daß das optische Bauelement in einer in den Sirahlengang einschwenkbaren Einzelfassung mittels einer Dreipunkt-Aufhängung gehaltert ist. Die Dreipunkt-Aufhängung kann einen das optische Bauelement peripher umgreifenden Ring umfassen, von dem aus drei Verbindungsstege zum Einzelfassungs-Rahmen verlaufen. Zweckmäßigerweise bestehen der Ring und die Verbindungssiege aus transparentem Maierial. Schließlich kann die Vorrichtung in der Weise ausgebildet sein, daß mehrere der optischen Bauelemente gleicher Querschnittsgeometrie und unterschiedlicher, die Abbildungseigenschaften beeinflußender Linsengeometrie auf einem gemeinsamen Träger, Schieber, Revolver oder dergleichen angeordnet und nacheinander in Wirkstellung bringbar sind.

Die Erfindung wird nachfolgend anhand der Figuren näher erläutert. Es zeigen in schematischer Darstellung:

Fig. 1: eine ausschnittsweise Seitenansicht der Strahlenverläufe in einem Auflicht-Mikroskop mit einer Autofokus-Anordnung und dem erfindungsgemäßen plankonvexen optischen Bauelement (im Querschnitt);

Fig. 2: die Draufsicht auf eine in einem Einzelfassungs-Rahmen gehalierte IR-Filterlinse gemäß Fig. 1.

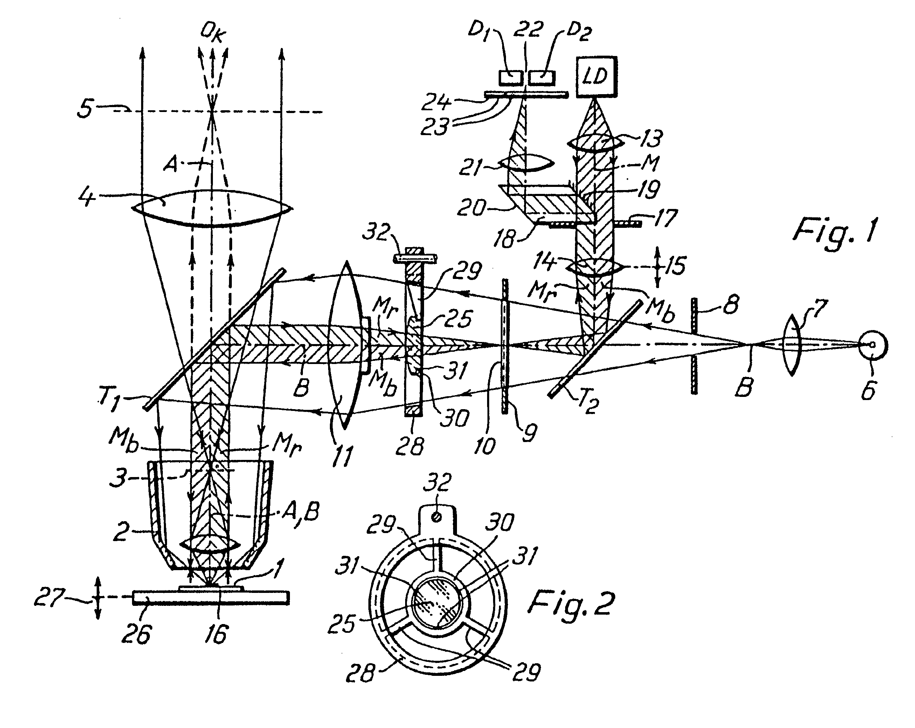

In Fig. 1 ist ein vertikal verlaufendes Abbildungsstrahlenbündel A dargestellt. Mit 1 ist ein Objekt bezeichnet, dessen Oberfläche sich in der Fokusebene befindei. Das Abbildungsstrahlenbündel A passiert zunächst ein Objektiv 2. Nach Verlassen der Objektivpupille 3 tritt das Bündel A durch einen ersten dichroitischen Teilerspiegel $T_1$, der im sichtbaren Bereich ein 50/50-Verhältnis und im IR eine hohe Reflexion, vorzugsweise 95 %, aufweist. Nach Durchtritt durch eine Tubuslinse 4 wird in der Zwischenbildebene 5 ein Bild des Objektes 1 erzeugt. Danach gelangt das Bündel A zum nicht mit dargestellten Okular $O_k$.

Der Beleuchtungsstrahlengang des optischen Gerätes verläuft im dargestellten Fall horizontal. Von einer Lichtquelle 6 tritt das Beleuchtungsstrahlenbündel B nach Verlassen einer Optik 7 durch eine Aperturblende 8. Das Bündel B durchsetzt sodann einen zweiten dichroitischen Sirahlenteiler $T_2$, der einen möglichst hohen Transmissionswert für das von der Lichtquelle 6 kommende sichtbare Licht und einen möglichst hohen Reflexionswert für IR-Strahlen aufweist. In der Ebene der Leuchtfeldblende 9 befindet sich eine Marke 10, deren Funktion im vorliegenden Zusammenhang außer Betracht bleiben kann. Das Bündel trifft sodann auf eine plankonvexe IR-Filterlinse 25. Dieses erfindungsgemäße Bauelement sperrt den Zentralbereich des von der Lichtquelle 6 kommenden Strahlenbündels B und läßt IR-Licht im wesentlichen ungehindert durch. Nach Verlassen der Linse 11 trifft das Beleuchtungsstrahlenbündel B auf den ersten dichroitischen Sirahlenteiler $T_1$, von wo aus die reflektierten Anteile in Richtung zum Objekt 1 umgelenkt werden.

Von einer Laserlichtquelle, die in der gezeigien Form als Laserdiode LD ausgebildet ist, geht ein - vorzugsweise gepulstes - Licht aus. Zweckmäßigerweise wird IR-Meßlicht verwendet, weil es das mikroskrpische Bild nicht störend beeinflußt. Das Meßlichtbündel M wird über eine Linse 13 und sodann über eine Linse 14, die in axialer Richtung gemäß dem Doppelpfeil 15 verschoben werden kann, auf den dichroitischen Teilerspiegel $T_2$ geleitet, der an der optischen Schnittstelle beider Sirahlengänge M und B angeordnet ist. In der Zwischenbildebene, in der die Leuchtfeldblende 9 positioniert ist, wird ein Bild der Laserlichtquelle LD erzeugt. Die Aperturblende 8 ist, wie auch die Leuchtfeldblende 9, motorisch verstellbar.

Damit der Meßspot 16 bei Defokussierung auf der Oberfläche des Objektes auswandert, wird eine Hälfte der Pupille 17 abgedeckt. Die geometrische Abdeckung einer Hälfte des Meßlichtbündels M gelingt mit Hilfe eines Umlenkprismas 18, welches in Höhe der Pupille 17 in den Meßstrahlengang M hälftig eingeführt wird. Es enthält eine vollverspiegelte Prismenfläche 19. Der Teil des beleuchtungsseitigen Meßlichtbündels, der durch die Anordnung des Umlenkprismas 18 nicht behindert wird, ist in der Fig. 1 mit einer ersten Schraffur gekenn zeichnet. Der außermittig verlaufende Teil des beleuchtungsseitigen Meßlichtbündels ist mit dem Bezugs zeichen $M_b$ versehen. Das Meßlicht gelangt also entlang $M_b$, d.h. außermittig und - im wesentlichen - parallel zur optischen Achse dieses Teilsystems, in die Objektivpupille 3.

Nach Reflexion an der Oberfläche des Objektes 1 passiert das remittierte Meßlichtstrahlenbündel $M_r$ nach Reflex ion an $T_2$ diejenige Pupillenhälfte von 17, die vom Meßlichtbündel $M_b$ nicht beleuchtet wird. Es wird sodann mittels der vollverspiegelten Fläche 19 des Umlenkprismas 18 aus dem beleuchtungsseitigen Meßsirahlengang M herausgespiegelt und nach Totalreflexion an der Prismenfläche 20 sowie nach Durchtritt durch eine Optik 21 auf die Differenzdiode geleitet, die aus zwei Dioden $D_1$ und $D_2$ besteht.

Zwischen beiden Dioden befindei sich ein schmaler Spalt 22. Vor der Differenzdiode $D_1,D_2$ ist eine Spaltblende 23 angeordnet. Sie besteht aus zwei Blendenhälften, zwischen denen ein Blendenspalt 24 freigehalten wird. Wie ersichtlich, verläuft der Blendenspalt 24 senkrecht zum Diodenspalt 22. Im Defokussierungsfall ist das Bild des Spots 16 aus der Zentrallage, die in Fig. 1 dargestellt ist, ausgewandert. Nicht mitdargestellte Mittel steuern nach Maßgabe der Deplazierung des Spot-Bildes das Objekt 1, genauer: den Objekttisch 26, in Richtung des Doppelpfeils 27 bis zur völligen Wiederherstellung des Fokuszustandes.

In der Zwischenbildebene, in der die Leuchtfeldblende 9 angeordnet ist, befindet sich eine Marke 10, mit deren Hilfe die Lage des unsichtbaren Meßspots 16 ermittelt wird. Sie kann aus einer sandwichartigen Doppelglasplatte bestehen, die in ihrem Innern zwei sich im Plattenzentrum kreuzende Flüssigkristallamellen aufweist, welche je nach angelegier Spannung den zentralen Kreuzungsbereich für das Beleuchtungslicht undurchlässig machen können.

Da die Linse 14 parallel zur optischen Achse des Meßlichtbündels M definiert verschoben werden kann, sind bei der gezeigten Einrichtung noch Zusatzfunktionen, wie "Offset"-Einstellungen und Fokusdifferenzkorrekturen zwischen infrarotem und sichtbaren Licht, möglich.

Die in Fig. 1 gezeigte schematische Darstellung ist -wenn man den Einzelfassungs-Rahmen 28, der die IR-Filterlinse 25 mittelbar umfaßt, um die Achse 32 aus dem Gesamtstrahlenbündel verschwenkt - prinzipiell aus der DE-PS 32 19 503 bekannt. Mit dieser vorbeschriebenen Anordnung läßt sich jedoch lediglich ein Gerät für Laserautofokus-Hellfeld-Auflichtbeleuchtung realisieren. In der vorliegenden Fig. 1 ist jedoch Auflicht-Dunkelfeldbeleuchtung dargestellt.

Hier setzt die vorliegende Erfindung ein:

Bringt man in den Zentralbereich des Gesamtstrahlenbündels die erfindungsgemäße IR-Filterlinse 25, so wird das von der Lichtquelle 6 kommende sichtbare Licht zu 100 % absorbiert, das von der Laserlichtquelle LD kommende IR-Licht dagegen ungehindert durchgelassen. Das als plankonvexe IR-Filierlinse 25 ausgebildete optische Bauelement ist derart dimensioniert, daß das sichtbare Licht lediglich in dem äußeren Sirahlenbündelbereich weiter zum Linsensystem 11, sodann zum ersten Teilerspiegel $T_1$ und von dort aus zum auf einem Objekttisch 26 befindlichen Objekt 1 gelangt. Damit ist eine Dunkelfeld-Beleuchtung unter Beibehaltung der IR-Laserautofokus-Funktion gewährleistei. Durch die Ausbildung des optischen Bauelementes als IR-Filterlinse wird darüber hinaus vor allem auch ein auftretender Fokusversatz automaiisch kompensiert.

In Fig. 2 ist eine Draufsicht der in den Sirahlengang bringbaren Halterung für das optische Bauelement, und zwar aus der Sicht aus Richtung der Lichtquelle 6, dargestellt. Der Einzelfassungs-Rahmen 28 ist um eine Achse 32 in den Strahlengang einschwenkbar. Die IR-Filterlinse 25 wird mit einem gewissen Abstand von einem Ring 30 umfaßt, der mittels dreier Verbindungsstege 29 mit dem äußeren Rahmen 28 zenirisch gehaltert wird. Die IR-Filterlinse 25 ist an drei Stellen mit dem Ring 30 verbunden, vgl. die Kittpunkte 31. Der Ring 30 sowie die Verbindungsstege 29 bestehen aus für sichtbares Licht transparentem Material. Anstelle der gezeigien Dreipunkt-Aufhängung sind selbstverständlich auch andere Konstruktionen denkbar, wobei aber die in Fig.

3

2 gezeigte Variante den Vorteil gegenüber anderen Vorschlägen aufweist, daß möglichst wenige Halte-Verbindungen im äußeren Strahlenbündelbereich vorhanden sind.

Anstelle einer Einzelaufhängung für das optische Bauelement sind auch Revolver, lineare Schieber, usw. zur Aufnahme mehrerer IR-Filterlinsen einsetzbar, wobei zweckmäßigerweise jede der Linsen hinsichtlich ihres IR-Transmissionsverhaltens im wesentlichen gleichwirkend, aber hinsichtlich ihrer Brechkraft jeweils unterschiedlich ausgelegt sein sollte.

Eine andere Anordnung unter Verwendung des optischen Bauelementes kann beispielsweise in der Weise getroffen sein, daß das Bauelement für sichtbares Licht vollständig absorbierend, jedoch für kurzwelliges (UV)-Licht transparent ist. Auf diese Weise läßt sich eine UV-Fluoreszenzeinrichtung mit einer Dunkelfeldanordnung kombinieren.

Weitere Anwendungsbeispiele betreffen den Einsatz des optischen Bauelementes als IR-Fresnel-(Filter)-Linse oder als Filter-Linsen-Array.

<u>Bezugzeichen- bzw. Bezugsziffern-Liste</u>

| | |
|---|---|
| A | - Abbildungssirahlenbündel |
| B | - Beleuchtungsstrahlenbündel |
| $D_1$, $D_2$ | - Dioden |
| LD | - Laserlichtquelle |
| M | - Meßlichtbündel |
| $M_b$ | - beleuchtungsseitiger Teil von (M) |
| $M_r$ | - remittiertes Meßlichtstrahlenbündel |
| $O_k$ | - Okular |
| $T_1$ | - erster Teilerspiegel (im Sichtbaren: 50/50-Teiler; im IR: vorzugsweise 95 % Reflexion) |
| $T_2$ | - zweiter (dichroitischer) Teilerspiegel |
| 1 | - Objekt |
| 2 | - Objektiv (für Dunkelfeld) |
| 3 | - Objektivpupille |
| 4 | - Tubuslinse |
| 5 | - Zwischenbildebene |
| 6 | - Lichiquelle |
| 7 | - Optik |
| 8 | - Aperturblende |
| 9 | - Leuchtfeldblende |
| 10 | - Marke |
| 11 | - Linsensystem |
| 13 | - Linse |
| 14 | - (axial verschiebliche) Linse |
| 15 | - Doppelpfeil |
| 16 | - Meßspot |
| 17 | - Pupille |
| 18 | - Umlenkprisma |
| 19 | - (verspiegelte) Prismenfläche |
| 20 | - Prismenfläche |
| 21 | - Optik |
| 22 | - Spalt |
| 23 | - Spaltblende |
| 24 | - Blendenspalt |
| 25 | - IR-Filterlinse |
| 26 | - Objekttisch |
| 27 | - Doppelpfeil |
| 28 | - Einzelfassungs-Rahmen |
| 29 | - Verbindungssteg (e) |
| 30 | - Ring |
| 31 | - Kittpunkt(e) |
| 32 | - Achse |

## EP 0 264 404 B1

### Patentansprüche

1. Vorrichtung zum selbsttätigen Fokussieren auf in Auflichtmikroskopen zu betrachtende Objekte (1), in der mittels eines außermittig verlaufenden, separaten Meßstrahlenbündels ($M_b$) ein Meßlichtpunkt auf der Objektoberfläche erzeugt und dieser mittels des remittierten, ebenfalls außermittig verlaufenden Meßstrahlenbündels ($M_r$) nach Ausblendung aus dem beleuchtungsseitigen Meßstrahlengang ($M_b$) auf einer fotoelektrischen Einrichtung ($D_1$, $D_2$) abgebildet wird derart, daß deren Signale bei Auswanderung der Objektebene aus der Fokusebene des Objectives (2) eine Steuereinrichtung erregen, die die Objektebene in die Fokusebene zurückführt, wobei diese Vorrichtung folgende Elemente enthält : eine Lichtquelle (LD) zum Erzeugen von Laserlicht für das Meßstrahlenbündel (M); ein optisches Bauteil (19, 18) zur geometrischen Abblendung einer Hälfte des beleuchtungsseitigen Meßstrahlenbündels ($M_b$) sowie gleichzeitig zur geometrischen Ausblendung des remittierten Meßstrahlenbündels ($M_r$) aus dem Meßstrahlengang; ein in axialer Richtung (15) definiert verschiebbares Linsensystem (14), dem Mittel zum Verstellen der Linse (14) nach Maßgabe des vorgegebenen Offsets zugeordnet sind; eine als Differenzdiode ($D_1$, $D_2$) ausgebildete fotoelektrische Einrichtung, wobei vor der Differenzdiode ($D_1$, $D_2$) eine Spaltblende (23) angeordnet und derart ausgerichtet ist, daß deren Spalt (24) senkrecht zum Spalt (22) der Differenzdiode ($D_1$, $D_2$) sowie in Richtung des - nach Maßgabe des jeweils vorliegenden Defokussierungs-betrages - wandernden Fleckes des abgebildeten Laser-Spots (16) verläuft; einen das beleuchtungseitige Meßlichtstrahlenbündel ($M_b$) in den Beleuchtungsstrahlengang (B) des optischen Gerätes einspiegelnden Teilerspiegel ($T_2$), und eine sichtbares Licht aussendende Lichtquelle (6) für ein Beleuchtungsstrahlenbündel (B), wobei das im IR-Bereich arbeitende Meßstrahlenbündel (M) und das Beleuchtungsstrahlenbündel (B) teilweise einen gemeinsamen Strahlengang haben, **dadurch gekennzeichnet**, daß eine IR-Filterlinse (25) in einem zentralen Bereich des gemeinsamen Lichtbündels (M,B) angeordnet ist; daß die IR-Filterlinse (25) sichtbares Licht absorbiert und IR-Licht durchläßt; daß der Querschnitt des Beleuchtungsstrahlenbündels (B) am Ort der IR-Filterlinse (25) größer als die IR-Filterlinse (25) ist, so daß ein Teil des Beleuchtungsstrahlenbündels (B) auf dem gemeinsamen Strahlengang außerhalb der IR-Filterlinse (25) verläuft; daß mit diesem Teil des Beleuchtungsstrahlenbündels (B) eine Dunkelfeldbeleuchtung des zu betrachtenden Objekts (1) erzeugt wird, und daß die IR-Filterlinse (25) in den Strahlengang (M,B) ein- und ausschiebbar angeordnet ist.

2. Vorrichtung nach Anspruch 1, **dadurch gekennzeichnet**, daß die IR-Filterlinse (25) zwischen einer Tubuslinse (11) und einer in der Ebene einer Leuchtfeldblende (9) vorgesehenen Marke (10) angeordnet ist.

3. Vorrichtung nach einem der Ansprüche 1 und 2, **dadurch gekennzeichnet**, daß die Infrarot-Filterlinse (25) sichtbares Licht vollständig absorbiert und ab einer im nahen IR-Bereich liegenden Wellenlänge eine transparente Filtercharakteristik aufweist, wobei maximale Transmission bei einer Wellenlänge von 903 nm gegeben ist.

4. Vorrichtung nach mindestens einem der vorhergehenden Ansprüche, **dadurch gekennzeichnet**, daß die IR-Filterlinse (25) bezüglich ihrer abbildungsrelevanten sowie ihrer Material- und Geometrie-Eigenschaften derart ausgewählt bzw. bemessen ist, daß ein durch Einschwenken der IR-Filterlinse (25) in das Beleuchtungsstrahlenbündel (B) hervorgerufener Fokusversatz entsprechend kompensiert wird.

5. Vorrichtung nach mindestens einem der vorhergehenden Ansprüche, **dadurch gekennzeichnet**, daß die IR-Filterlinse (25) in einer in den Strahlengang einschwenkbaren Einzelfassung (28) vorzugsweise mittels einer Dreipunkt-Aufhängung (29, 30) - gehaltert ist (Fig. 2).

6. Vorrichtung nach Anspruch 5, **dadurch gekennzeichnet**, daß die Dreipunkt-Aufhängung einen die IR-Filterlinse (25) peripher umgreifenden Ring (30) umfaßt, von dem aus drei Verbindungsstege (29) zum Einzelfassungs-Rahmen (28) verlaufen, und daß der Ring (30) und die Verbindungsstege (29) aus transparentem Material bestehen.

7. Vorrichtung nach mindestens einem der vorhergehenden Ansprüche, **dadurch gekennzeichnet**, daß mehrere IR-Filterlinsen gleicher Querschnittsgeometrie, aber unterschiedlicher, die Abbildungseigenschaften beeinflußender Linsengeometrie auf einem gemeinsamen Träger, Schieber, Revolver oder dergleichen angeordnet und nacheinander in Wirkstellung bringbar sind.

### Claims

1. Device for the automatic focussing of objects (1) to be viewed in incident light microscopes, in which device a measurement light spot is produced on the object surface by means of a separate, eccentrically extending measurement beam ($M_b$) and imaged onto a photoelectric equipment ($D_1$, $D_2$) in such a manner by means of the returned, likewise eccentrically extending measurement beam ($M_r$) after masking-out from the measurement ray path ($M_b$) at the illumination side that the signals of the photo-electric equipment ($D_1$, $D_2$) on

the wandering of the object plane out of the focal plane of the objective (2) excite a control equipment which leads the object plane back into the focal plane, wherein this device contains the following elements: a light source (LD) for the production of laser light for the measurement beam (M); an optical component (19, 18) for the geometric stopping-down of one half of the measurement beam (Mb) at the illumination side as well as at the same time for the geometric masking-out of the returned measurement beam (Mr) from the measurement ray path; a lens system (14), which is displaceable in defined manner in axial direction (15) and associated with means for the resetting of the lens (14) in accordance with the preset offset; a photo-electric equipment constructed as differential diode (D₁, D₂), wherein a slit diaphragm (23) is arranged in front of the differential diode (D₁, D₂) and oriented in such a manner that its slit (24) extends perpendicularly to the gap (22) of the differential diode (D₁, D₂) as well as in the direction of the spot, which wanders in accordance with the respectively present amount of defocussing, of the imaged laser spot (16); a divider mirror (T2) reflecting the measurement beam (Mb) at the illumination side into the illumination ray path (B) of the optical device and a light source (6) emitting visible light for an illumination beam (B), wherein the measurement beam (Mb) operating in the infra-red range and the illumination beam (B) partially have a common ray path, characterised thereby, that an infra-red filter lens (25) is arranged in a central region of the common light beam (M, B), that the infra-red filter lens (25) absorbs visible light and transmits infra-red light, that the cross-section of the illumination beam (B) at the location of the infra-red filter lens (25) is greater than that of the infra-red filter lens (25) so that a part of the illumination beam (B) on the common ray path extends outside the infra-red filter lens (25), that a dark field illumination of the object (1) to be viewed is produced by this part of the illumination beam (B) and that the infra-red filter lens (25) is arranged to be pushable into and out of the ray path (M, B).

2. Device according to claim 1, characterised thereby, that the infra-red filter lens (25) is arranged between a tubus lens (11) and a mark (10) provided in the plane of a radiant field stop (9).

3. Device according to one of the claims 1 and 2, characterised thereby, that the infra-red filter lens (25) completely absorbs visible light and displays a transparent filter characteristic from a wavelength lying in the near infra-red range, wherein maximum transmission is given for a wavelength of 903 nanometres.

4. Device according to at least one of the preceding claims, characterised thereby, that the infra-red filter lens (25) is chosen or dimensioned in such a manner in respect of its properties relevant to imaging as well as of geometry and of material that a focus displacement caused by pivotation of the infra-red filter lens (25) into the illumination beam (B) is compensated for appropriately.

5. Device according to at least one of the preceding claims, characterised thereby, that the infra-red filter lens (25) is retained, preferably by means of a three-point suspension (29, 30), in an individual mount (28), which is pivotable into the ray path (Figure 2).

6. Device according to claim 5, characterised thereby, that the three-point suspension comprises a ring (30), which embraces the infra-red filter lens (25) peripherally and from which three connecting webs (29) extend to the individual mount frame (28) and that the ring (30) and the connecting webs (29) consist of transparent material.

7. Device according to at least one of the preceding claims, characterised thereby, that several infra-red filter lenses of the same cross-sectional geometry, but different lens geometry influencing the imaging properties are arranged on a common carrier, slide, turret or the like and bringable into operative setting one after the other.

**Revendications**

1. Dispositif pour la focalisation automatique sur des objets (1) à examiner dans des microscopes à éclairage incident, dans lequel au moyen d'un faisceau de rayons de mesure (Mb) séparé s'étendant excentriquement est produit un point lumineux de mesure sur la surface d'objet et celui-ci est représenté sur un dispositif photo-électrique (D₁,D₂) au moyen du faisceau de rayons de mesure rémittant (Mr) s'étendant également excentriquement après extraction par diaphragmage du trajet de rayons de mesure (Mb) côté éclairage de telle façon que leurs signaux, lors de l'excursion du plan d'objet hors du plan focal de l'objectif (2), excitent un dispositif de commande qui ramène le plan d'objet dans le plan focal, ce dispositif contenant les éléments suivants : une source de lumière (LD) pour la production de lumière laser pour le faisceau de rayons de mesure (M); un élément de construction optique (19,18) pour le masquage par diaphragmage géométrique d'une moitié du faisceau de rayons de mesure côté éclairage (Mb) ainsi qu'en même temps pour l'extraction par diaphragmage géométrique du faisceau de rayons de mesure rémittant (Mr) hors du trajet de rayons de mesure; un système de lentille (14) déplaçable de façon definie en direction axiale (15), auquel sont associés des moyens pour le déplacement de la lentille (14) en fonction de l'offset donne à l'avance; un dispositif photoélectrique réalisé sous forme de diode différentielle (D₁,D₂), un diaphragme à fente (23) étant disposé devant la diode

différentielle (D$_1$, D$_2$) et orienté de telle manière que sa fente (24) s'étend perpendiculairement à la fente (22) de la diode différentielle (D$_1$, D$_2$) ainsi qu'en direction de l'attache du spot laser (16) représenté en image, dérivant en fonction de la valeur de défocalisation respectivement exisiante; un miroir diviseur (T$_2$) réfléchissant le faisceau de rayons de lumière de mesure (M$_b$) côte éclairage dans le trajet de rayons d'éclairage (B) de l'appareil optique, et une source lumineuse (6) émettant une lumière visible pour un faisceau de rayons d'éclairage (B), le faisceau de rayons de mesure (M) travaillant dans le domaine de l'infrarouge et le faisceau de rayons d'éclairage (B) ayant partiellement un trajet de rayons commun, caractérisé en ce qu'une lentille-filtre à infrarouge (25) est disposée dans une zone centrale du faisceau de lumière commun (M, B); en ce que la lentille-filtre à infrarouge (25) absorbe de la lumière visible et laisse passer de la lumière infrarouge; en ce que la section transversale du faisceau de rayons d'éclairage (B) à l'emplacement de la lentille-filtre à infrarouge (25) est plus grande que la lentille-filtre à infrarouge (25), de sorte qu'une partie du faisceau de rayons d'éclairage (B) s'étend sur le trajet de rayons commun extérieurement à la lentille-filtre à infrarouge (25); en ce que par cette fraction du faisceau de rayons d'éclairage (B) est produit un éclairage sur fond obscur de l'objet (1) à regarder et en ce que la lentille-filtre à infrarouge (25) est disposée de façon à être déplaçable pour introduction dans le trajet de rayons (M, B) et sortie hors de celui-ci.

2. Dispositif selon la revendication 1, caractérisé en ce que la lentille-filtre à infrarouge (25) est disposée entre une lentille tubulaire (11) et une marque de repérage (10) prévue dans le plan d'un diaphragme (9) limitant le champ lumineux.

3. Dispositif selon l'une des revendications 1 et 2, caractérisé en ce que la lentille-filtre à infrarouge (25) absorbe complètement de la lumière visible et présente une caractéristique de filtrage transparente à partir d'une longueur d'onde située dans le domaine infrarouge proche, la transmission maximale étant donnée pour une longueur d'onde de 903 nm.

4. Dispositif selon au moins l'une des revendications précédentes, caractérisé en ce que la lentille-filtre à infrarouge (25) est choisie et dimensionnée de telle manière relativement à ses propriétés pertinentes à l'image ainsi qu'à ses propriétés de matière et de géométrie qu'un déport de foyer, provoqué par l'insertion de la lentille-filtre à infrarouge (25) par pivotement dans le faisceau de rayons d'éclairage (B), est compensé de manière correspondante.

5. Dispositif selon au moins l'une des revendications précédentes, caractérisé en ce que la lentille-filtre à infrarouge (25) est supportée - de préférence au moyen d'une suspension en trois points (29,30) - dans une monture individuelle (28) insérable par pivotement dans le trajet des rayons (figure 2).

6. Dispositif selon la revendication 5, caractérisé en ce que la suspension en trois points comprend un anneau (30) entourant périphériquement la lentille-filtre à infrarouge (25) et duquel s'étendent trois barrettes de liaison (29) jusqu'au châssis de monture individuelle (28) et en ce que l'anneau (30) et les barrettes de liaison (29) consistent en matière transparente.

7. Dispositif selon au moins l'une des revendications précédentes, caractérisé en ce que plusieurs lentilles-filtre à infrarouge de même géométrie de section transversale mais à géométrie de lentille différente, influençant les propriétés de formation d'image, sont montées sur un support, coulisseau, barillet ou analogue commun et peuvent être amenées les unes après les autres en position active.